# EUROPÄISCHE PATENTSCHRIFT

(11) **EP 2 037 230 B1**
(45) Veröffentlichungstag und Bekanntmachung des Hinweises auf die Patenterteilung: **22.08.2012**
(21) Anmeldenummer: 08010849.1
(22) Anmeldetag: 14.06.2008
(51) Int. Cl.: G01D 5/347

(54) **Längenmesseinrichtung**
Length measuring device
Dispositif de mesure de longueur

(30) Priorität: 15.09.2007 DE 102007044128
(43) Veröffentlichungstag der Anmeldung: 18.03.2009
(73) Patentinhaber: Dr. Johannes Heidenhain GmbH, 83301 Traunreut (DE)
(72) Erfinder: Affa, Alfred, 83371 Stein / Traun (DE)

(56) Entgegenhaltungen:
- EP-A- 1 180 662
- EP-B- 0 459 294

## Beschreibung

Die Erfindung betrifft eine Längenmesseinrichtung nach dem Oberbegriff des Anspruchs 1.

Derartige Längenmesseinrichtungen, wie sie beispielsweise in der DE 28 45 542 B1, der DE 32 01 887 A1, der EP 0 459 294 B1 und der EP 1 180 662 A2 beschrieben sind, dienen zur Messung von Längen sowie Wegen und werden insbesondere bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie eingesetzt.

Dabei wird als Maßverkörperung ein Maßstab mit einer Messteilung verwendet, der vor Umwelteinflüssen geschützt in einem in Messrichtung längserstreckten Gehäuse untergebracht ist. Die Messteilung, die inkremental oder absolut codiert ist, wird bei der Positionsmessung von einem Abtastwagen abgetastet. Hierzu wird der Abtastwagen an zwei senkrecht zueinander verlaufenden Führungsflächen des Maßstabs in Messrichtung längsgeführt und an diese angedrückt. Diese Führung hat sich bewährt, da gewährleistet ist, dass über die gesamte Messlänge ein konstanter Abtastabstand zwischen dem Abtastwagen -insbesondere der Abtastplatte- und dem Maßstab eingehalten wird, was eine gute Qualität der Abtastsignale garantiert. Die Führung des Abtastwagens ist von der Führung des zu messenden Objektes entkoppelt, indem zwischen dem zu messenden Objekt und dem Abtastwagen ein Mitnehmer mit einer Kupplung vorgesehen ist, welche den Abtastwagen in Messrichtung steif und quer dazu nachgiebig an den Mitnehmer ankoppelt.

Bei der EP 0 459 294 B1 besteht die Kupplung aus zwei sich kontaktierenden Kupplungsteilen. Zur Verminderung von Verschleiß zwischen den sich kontaktierenden Kupplungsteilen ist eine Gleitschicht vorgesehen. Diese Gleitschicht ist eine dünne Gleitfolie und besteht beispielsweise aus einem PTFE-haltigen Kunststoff. In der Praxis wurde das am Mitnehmer befestigte Kupplungsteil gemäß des Standes der Technik als Stahlstift ausgeführt, der sich in einer Bohrung des Mitnehmers abstützt. Der Stift war ausgehend vom Kontaktpunkt symmetrisch ausgebildet. Um den Kontaktpunkt möglichst nahe an die neutrale Ebene (Faser) des Maßstabs zu bringen, also an den Maßstab selbst zu bringen, war der Durchmesser des Stiftes sehr gering gewählt, was aber die Stabilität negativ beeinflusste.

Die EP 1 180 662 A2 beschreibt, dass die Kupplungsteile aus keramischen Material bestehen können.

Die Anforderungen an Längenmesseinrichtungen werden immer höher, es wird laufend eine höhere Auflösung sowie eine höhere Genauigkeit und Reproduzierbarkeit der Positionsmessung gefordert. Dabei soll ein kompakter mechanischer Aufbau vorhanden sein und die Längenmesseinrichtung soll kostengünstig herstellbar sein.

Der Erfindung liegt daher die Aufgabe zugrunde, eine Längenmesseinrichtung mit reproduzierbarer hoher Messgenauigkeit zu schaffen, die kostengünstig herstellbar ist.

Diese Aufgabe wird erfindungsgemäß durch die Merkmale des Anspruchs 1 gelöst.

Eine hohe Messgenauigkeit bedingt einen über die gesamte Messlänge konstanten Abtastabstand. Dies wird durch Führung des Abtastwagens an der Längenmesseinrichtung selbst, insbesondere am Maßstab erreicht. Zur präzisen, von Führungsungenauigkeiten des zu messenden Objektes entkoppelten Führung des Abtastwagens ist dieser am Mitnehmer über eine nur in Messrichtung steife Kupplung an den Abtastwagen angekoppelt. Die erfindungsgemäße Ausführung der Kupplung ermöglicht in allen anderen Richtungen eine Bewegung des Mitnehmers ohne Rückwirkung auf die präzise Führung und Bewegung des Abtastwagens in Messrichtung. Die Reibungseigenschaften sowie die Verschleißeigenschaften sind optimiert, bei möglichst hoher Stabilität und kostengünstiger Herstellung. Insbesondere ist eine lange Lebensdauer und über diese lange Lebensdauer eine reproduzierbare Positionsmessung erreichbar.

In den abhängigen Ansprüchen sind vorteilhafte Ausgestaltungen der Erfindung angegeben.

Die Erfindung wird mit Hilfe eines Ausführungsbeispiels näher erläutert.

### Dabei zeigt

- Figur 1: einen Teilschnitt einer Längenmesseinrichtung in Messrichtung und

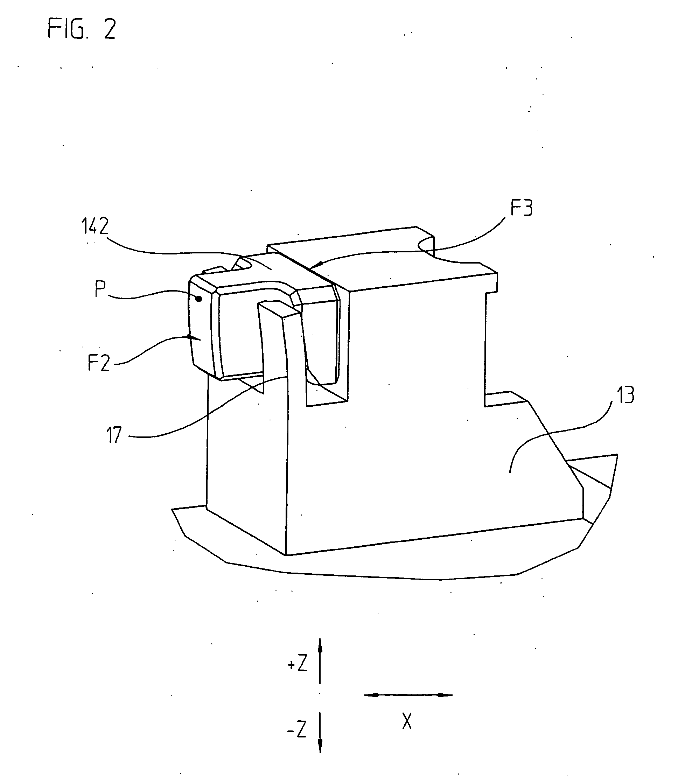

- Figur 2: eine perspektivische Ansicht eines Kupplungsteils der Längenmesseinrichtung gemäß Figur 1.

Die Erfindung ist am Beispiel einer optischen Längenmesseinrichtung dargestellt, mit der die Relativlage zweier in Messrichtung X gegeneinander verschiebbarer Objekte gemessen werden soll. Dabei wird ein transparenter Maßstab 20, insbesondere aus Glas, von einem relativ zum Maßstab 20 in Messrichtung X bewegbaren Abtastwagen 10 abgetastet. Der Maßstab 20 weist eine Messteilung 21 auf, die von dem Abtastwagen 10 im Durchlicht abgetastet wird. Dazu umfasst der Abtastwagen 10 eine Beleuchtungseinheit, die ein Lichtbündel aussendet, welches durch den Maßstab 20 verläuft und schließlich auf lichtempfindliche Abtastsensoren des Abtastwagens 10 trifft. Das Lichtbündel wird dabei von der Messteilung 21 am Maßstab 20 positionsabhängig moduliert.

Der Maßstab 20 ist innerhalb eines Gehäuses 22 angeordnet, welches wiederum an dem zu messenden Objekt, beispielsweise einem Maschinenbett einer Werkzeugmaschine befestigt ist. Der Maßstab 20 ist dabei in bekannter Weise mit dem Gehäuse 22 verbunden, beispielsweise durch Kleben oder Klemmen. Das Gehäuse 22 weist in seiner Längsrichtung in Messrichtung X verlaufend einen Schlitz auf, der durch dachförmig geneigte Dichtlippen verschlossen ist, durch die ein Mitnehmer 13 mit einem schwertförmigen Mittelstück hindurchgreift. Der Mitnehmer 13 weist einen Montagebereich 131 auf, mit dem er an dem relativ zum Maschinenbett verschiebbaren Objekt, beispielsweise einem Schlitten der Werkzeugmaschine, befestigbar ist.

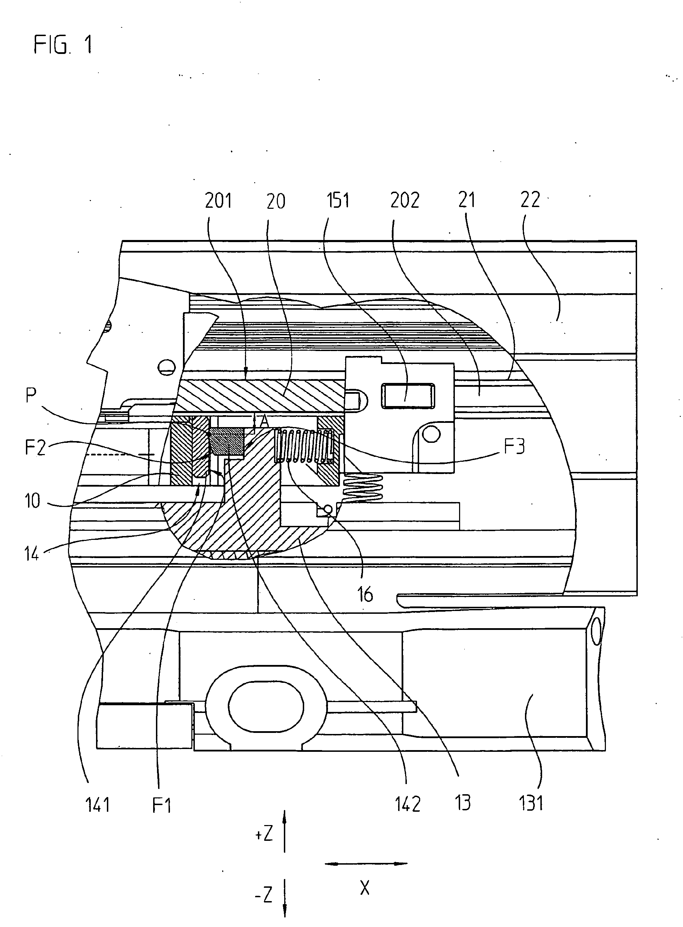

Der Abtastwagen 10 ist zur exakten Parallelführung längs des Maßstabs 20 an diesem geführt. Der Abtastwagen 10 stützt sich dazu über Führungselemente an zwei senkrecht zueinander ausgerichteten Flächen 201, 202 des Maßstabs 20 ab. Eine dieser Flächen ist die die Messteilung 21 tragende Oberfläche 201 und die andere eine senkrecht dazu verlaufende Schmalseite 202 des Maßstabs 20. Die Führungselemente können Gleitelemente sein, aber insbesondere kugelgelagerte Walzen bzw. Rollen 151, von denen in Figur 1 nur eine dargestellt ist.

Zwischen dem Abtastwagen 10 und dem Mitnehmer 13 ist eine Kupplung 14 angeordnet, die den Abtastwagen 10 in Messrichtung X steif und quer dazu nachgiebig an den Mitnehmer 13 ankoppelt. Durch diese Maßnahme werden Fehlausrichtungen des Mitnehmers 13 nicht auf den Abtastwagen 10 übertragen. Diese Kupplung 14 weist ein erstes Kupplungsteil 141 am Abtastwagen 10 und ein zweites Kupplungsteil 142 am Mitnehmer 13 auf. Eine Kupplungsfläche F1 des ersten Kupplungsteils 141 kontaktiert im Betrieb ständig eine Kupplungsfläche F2 des zweiten Kupplungsteils 142. Das erste Kupplungsteil 141 ist eine Platte und die Kupplungsfläche F1 ist eine ebene Fläche, die senkrecht zur Messrichtung X ausgerichtet ist. Die Kupplungsfläche F2 des zweiten Kupplungsteils 142 ist sphärisch, insbesondere kugelförmig ausgebildet, so dass sich zwischen der Kupplungsfläche F1 des ersten Kupplungsteils 141 und der Kupplungsfläche F2 des zweiten Kupplungsteils 142 eine punktförmige Kontaktierung P ergibt.

Ein Kraftelement, im Beispiel eine Druckfeder 16, bewirkt eine kraftschlüssige Verbindung der beiden Kupplungsteile 141, 142. Diese Anordnung ergibt eine in Messrichtung X äußerst steife Ankopplung. Die restlichen fünf Freiheitsgrade werden bei Relativbewegungen zwischen dem Abtastwagen 10 und dem Mitnehmer 13 nicht beeinträchtigt. Diese Relativbewegungen, hervorgerufen durch Führungsfehler zwischen Maschinenführung und Führung des Abtastwagens 10 im Längenmessgerät, führen, zu einem Gleiten der kugelig gekrümmten Kupplungsfläche F2 des zweiten Kupplungsteils 142 an der ebenen Kupplungsfläche F1 des ersten Kupplungsteils 141.

Zumindest eines der beiden Kupplungsteile 141, 142 besteht zumindest im Bereich der Kontaktierung P aus Keramik. Im dargestellten Ausführungsbeispiel bestehen beide Kupplungsteile 141, 142 aus Keramik, nämlich das am Abtastwagen 10 fixierte plattenförmige erste Kupplungsteil 141 und das am Mitnehmer 13 fixierte zweite Kupplungsteil 142 mit der kugeligen Kupplungsfläche F2.

Bei der Keramik handelt es sich um ein nichtmetallisches anorganisches Material. Besonders vorteilhaft ist die Verwendung von Oxid-Keramik, insbesondere Zirkoniumoxid.

Das zweite Kupplungsteil 142 stützt sich mit einer senkrecht zur Messrichtung X verlaufenden Auflagefläche F3 am Mitnehmer 13 ab. Diese Auflagefläche F3 ist von der die Kupplungsfläche F1 des ersten Kupplungsteils 141 kontaktierende Kupplungsfläche F2 in Messrichtung X beabstandet angeordnet. Die kugelige Kupplungsfläche F2 des zweiten Kupplungsteils 142 kontaktiert die ebene Kupplungsfläche F1 des ersten Kupplungsteils 141 punktförmig, und der Ort dieser punktförmigen Kontaktierung P weist einen Abstand A zum Maßstab 20 auf, wobei dieser Abstand A in einer Richtung senkrecht zur Messrichtung X verläuft. Die Auflagefläche F3 weist eine Ausdehnung senkrecht zur Messrichtung X auf, die vom durch die Kontaktierung P vorgegebenen Ort ausgehend in Richtung +Z des Maßstabs 20 um ein Vielfaches kleiner ist, als in der Richtung -Z, also vom Maßstab 20 wegweisend. Dadurch ist sichergestellt, dass die Kontaktierung P des zweiten Kupplungsteils 142 möglichst nahe am Ort der neutralen Ebene des Maßstabs 20, in der Regel die Mitte des Maßstabs 20, angeordnet ist und trotzdem das zweite Kupplungsteil 142 am Mitnehmer 13 eine große Auflagefläche F3 und somit eine große Steifigkeit in Messrichtung X aufweist. Diese vom Punkt P ausgehend betrachtete unsymmetrische Ausgestaltung ist durch die Materialwahl besonders einfach fertigbar.

Das zweite Kupplungsteil 142 ist zur einfachen Montage am Mitnehmer 13 durch Halteelemente 17 fixiert. Diese Halteelemente 17 haben die Funktion einer am Mitnehmer 13 vorgesehenen Klebevorrichtung, die das zweite Kupplungsteil 142 zur Klebung am Mitnehmer 13 in einer Sollposition bis zum Aushärten des Klebers sicher fixiert.

Die besonderen Vorteile der Erfindung bestehen darin, dass die Kupplung 14 eine sehr hohe Festigkeit und Formstabilität und somit eine besonders hohe Steifigkeit in Messrichtung X aufweist. Dieser Vorteil ergibt sich einerseits allein aufgrund der Materialwahl und wird durch die die Materialwahl ermöglichte Formgestaltung noch weiter verbessert.

Aufgrund der Materialauswahl ist eine gute tribologische Eigenschaft an der Kontaktierung P der Kupplungsteile 141, 142 erreicht. Es tritt kein Verschleiß auf, welcher die Messgenauigkeit beeinträchtigen würde. Ebenso tritt kein Abrieb auf, der den Maßstab 20 verschmutzen würde und ebenfalls die Qualität der Abtastsignale negativ beeinflussen und somit die Messgenauigkeit reduzieren würde.

Mit dem Keramikmaterial lässt sich mit geringem Aufwand und somit besonders kostengünstig die geforderte Form und eine formgenaue glatte Oberfläche erzielen; indem die Kupplungsteile 141, 142 durch Sinterverfahren hergestellt werden.

Die Erfindung ist nicht auf eine Längenmesseinrichtung mit optischem Abtastprinzip beschränkt. Die Abtastung des Maßstabs kann auch kapazitiv, magnetisch oder induktiv sein, wozu die Messteilung und die Abtastsensoren entsprechend auszubilden sind.

## Patentansprüche

1. Längenmesseinrichtung zur Messung der Relativposition zweier Objekte, mit
- einem Maßstab (20);
- einem Abtastwagen (10) zur Abtastung einer Messteilung (21) des Maßstabs (20), wobei der Abtastwagen (10) an Führungsflächen (201, 202) der Längenmesseinrichtung in Messrichtung (X) längsgeführt ist;
- einer Kupplung (14), über die der Abtastwagen (10) in Messrichtung (X) steif und quer dazu nachgiebig an einen Mitnehmer (13) angekoppelt ist, der an einem der beiden Objekte befestigbar ist, wobei die Kupplung (14) ein erstes Kupplungsteil (141) am Abtastwagen (10) und ein zweites Kupplungsteil (142) am Mitnehmer (13) aufweist, und eine Kupplungsfläche (F1) des ersten Kupplungsteils (141) eine Kupplungsfläche (F2) des zweiten Kupplungsteils (142) punktförmig kontaktiert, wobei
- das zweite Kupplungsteil (142) aus keramischen Material besteht und die Kupplungsfläche (F2) des zweiten Kupplungsteils (142) kugelförmig ist;
- das zweite Kupplungsteil (142) ein am Mitnehmer (13) starr fixierter Körper ist, der sich mit einer senkrecht zur Messrichtung (X) verlaufenden Auflagefläche (F3) am Mitnehmer (13) abstützt, wobei die Auflagefläche (F3) von der Kupplungsfläche (F2) in Messrichtung (X) beabstandet ist;
- die Auflagefläche (F3) des zweiten Kupplungsteils (142) eine Ausdehnung senkrecht zur Messrichtung (X) aufweist, die vom durch die punktförmige Kontaktierung (P) vorgegebenen Ort in Richtung (+Z) des Maßstabs (20) um ein Vielfaches kleiner ist, als in der Richtung (-Z) vom Maßstab (20) wegweisend.

2. Längenmesseinrichtung nach Anspruch 1, **dadurch gekennzeichnet, dass** das keramische Material Zirkoniumoxid ist.

3. Längenmesseinrichtung nach einem der Ansprüche 1 bis 2, **dadurch gekennzeichnet, dass** die Kupplungsfläche (F1) des ersten Kupplungsteils (141) eine Ebene ist, die senkrecht zur Messrichtung (X) verläuft.

4. Längenmesseinrichtung nach einem der vorhergehenden Ansprüche, **dadurch gekennzeichnet, dass** ein Kraftelement (16) vorgesehen ist, welches die beiden Kupplungsteile aneinanderdrängt.

5. Längenmesseinrichtung nach Anspruch 4, **dadurch gekennzeichnet, dass** das Kraftelement eine Feder (16) ist.

## Claims

1. Length measuring device for measuring the relative position of two objects, having
- a scale (20);
- a scanning carriage (10) for scanning a measuring graduation (21) of the scale (20), the scanning carriage (10) being longitudinally guided in a measuring direction (X) on guide surfaces (201, 202) of the length measuring device;
- a coupling (14) via which the scanning carriage (10) is coupled, rigidly in the measuring direction (X) and resiliently transversely thereto, to a driver (13) which can be fastened on one of the two objects, the coupling (14) having a first coupling part (141) on the scanning carriage (10) and a second coupling part (142) on the driver (13), and a coupling face (F1) of the first coupling part (141) making punctiform contact with a coupling face (F2) of the second coupling part (142), in which
- the second coupling part (142) consists of ceramic material, and the coupling face (F2) of the second coupling part (142) is spherical;
- the second coupling part (142) is a body which is rigidly fixed on the driver (13) and is supported on the driver (13) by a bearing face (F3) running perpendicular to the measuring direction (X), the bearing face (F3) being spaced apart from the coupling face (F2) in the measuring direction (X) ; and
- the bearing face (F3) of the second coupling part (142) having an extent perpendicular to the measuring direction (X) which, from the location predefined by the punctiform contact (P) in the direction (+Z) of the scale (20) is smaller by a multiple than in the direction (-Z) pointing away from the scale (20).

2. Length-measuring device according to Claim 1, **characterized in that** the ceramic material is zirconium oxide.

3. Length-measuring device according to either of Claims 1 and 2, **characterized in that** the coupling face (F1) of the first coupling part (141) is a plane which runs perpendicular to the measuring direction (X).

4. Length-measuring device according to one of the preceding claims, **characterized in that** a force-exerting element (16) is provided which urges the two coupling parts towards one another.

5. Length-measuring device according to Claim 4, **characterized in that** the force-exerting element is a spring (16).

## Revendications

1. Dispositif de mesure de longueur destiné à mesurer la position relative de deux objets et présentant :
- un barreau de mesure (20),
- un chariot de palpage (10) qui palpe une division de mesure (21) du barreau de mesure (20), le chariot de palpage (10) étant guidé longitudinalement dans la direction de mesure (X) sur des surfaces de guidage (201, 202) du dispositif de mesure de longueur,
- un accouplement (14) par lequel le chariot de palpage (10) est accouplé à un entraîneur (13) rigidement dans la direction de mesure (X) et de manière déformable dans la direction transversale par rapport à cette dernière,
l'entraîneur pouvant être fixé sur l'un des deux objets,
l'accouplement (14) présentant une première partie d'accouplement (141) disposée sur le chariot de palpage (10) et une deuxième partie d'accouplement (142) disposée sur l'entraîneur (13),
une surface d'accouplement (F1) de la première partie d'accouplement (141) étant en contact ponctuel avec une surface d'accouplement (F2) de la deuxième partie d'accouplement (142),
- la deuxième partie d'accouplement (142) étant constituée d'un matériau céramique et la surface d'accouplement (F2) de la deuxième partie d'accouplement (142) étant de forme sphérique,
- la deuxième partie d'accouplement (142) étant un corps fixé rigidement sur l'entraîneur (13) et qui s'appuie sur l'entraîneur (13) par une surface d'appui (F3) qui s'étend perpendiculairement à la direction de mesure (X),
la surface d'appui (F3) étant située à distance de la surface d'accouplement (F2) dans la direction de mesure (X) et
- l'extension de la surface d'appui (F3) de la deuxième partie d'accouplement (142) dans la direction perpendiculaire à la direction de mesure (X) depuis l'emplacement prédéterminé par le contact ponctuel (P) dans la direction (+Z) du barreau de mesure (20) étant une fraction de l'extension dans la direction (-Z) du barreau de mesure (20).

2. Dispositif de mesure de longueur selon la revendication 1, **caractérisé en ce que** le matériau céramique est l'oxyde de zirconium.

3. Dispositif de mesure de longueur selon l'une des revendications 1 et 2, **caractérisé en ce que** la surface d'accouplement (F1) de la première partie d'accouplement (141) est un plan perpendiculaire à la direction de mesure (X).

4. Dispositif de mesure de longueur selon l'une des revendications précédentes, **caractérisé en ce qu'**il présente un élément (16) appliquant une force qui repousse l'une contre l'autre les deux parties d'accouplement.

5. Dispositif de mesure de longueur selon la revendication 4, **caractérisé en ce que** l'élément d'application d'une force est un ressort (16).
